# EUROPEAN PATENT APPLICATION

(11) **EP 2 677 715 A1**
(43) Date of publication of application: **25.12.2013**
(21) Application number: 12305723.4
(22) Date of filing: 22.06.2012
(51) Int. Cl.: H04L 29/06

(54) **A method and a server for evaluating a request for access to content from a server in a computer network**

(71) Applicant: Alcatel Lucent, 75007 Paris (FR)
(72) Inventor: Varji Siddappa, Basavaraj, 560078 Karnataka Bangalore (IN)
(74) Representative: Lück, Stephan

(57) **Abstract**

The invention concerns a method to evaluate, in particular on a server (101), a request for access to content from a further server (130) in a computer network (100), wherein upon receipt of the request for access to the further server (130) comprising information about the further server (130), a test is performed to determine whether the access is allowed or denied, the test comprising the steps of
- sending a further request for user input to confirm the request for access comprising information about the further server (130) to a pre-determined device (120) in case no link can be established between the information about the further server (130) and pre-determined information about servers,
- evaluating the request upon receipt of a response to said further request.

## Description

### Field of the invention

The invention relates to a method, a server, a computer program and a computer program product for evaluating a request for access to content from a server in a computer network.

### Background

In an implementation capable to evaluate a request for access to content from a server in a computer network a firewall installed between the client and the server is used in order to filter undesired requests for access to the content from the server. Such firewalls typically are implemented either on the client or on a network node between the client and the server. Another implementation capable of evaluating such requests for access to content from a server comprise of a proxy server that is adapted to evaluate requests for access to content from servers for example based on blacklists or whitelists. Blacklists and whitlists in this context are for example data files comprising a list addresses, Unified Resource Locators, keywords or any other means to identify servers or content that is to be blocked (Blacklist) or allowed (whitelist). In yet another implementation capable of evaluating request for access to content from a server, content filtering software is used to block requests based on the content requested.

These implementations work automatically and process requests from clients for access to servers for example in the internet.

However, firewalls, proxy servers and content filtering software need to be configured and updated frequently in order to block undesired requests properly. Typically this configuration and updates are triggered by an administrator on a regular basis for example once a day. Blacklists and whitelists are for example provided by authorities or private companies and typically are updated once a day.

A significant amount of work is required to personalize the settings of firewalls, proxy servers and content filtering software in order to fit the settings to the need of a certain client. The changes being triggered by administrators or update processes on the server the solutions using firewalls, proxy servers and content filtering software are static within an update cycle. They do not allow on-the-fly control of the configuration of the settings of the details.

### Summary

The object of the invention is thus to provide a more dynamic access control.

The main idea of the invention is to evaluate, in particular on a server, a request for access to content from a further server in a computer network, wherein upon receipt of the request for access to the further server comprising information about the further server, a test is performed to determine whether the access is allowed or denied, the test comprising the steps of
- sending a further request for user input to confirm the request for access comprising information about the further server to a pre-determined device in case no link can be established between the information about the further server and pre-determined information about servers,
- evaluating the request upon receipt of a response to said further request. This way the evaluation is performed request based and forwarded to a pre-determined device for approval in case the automatic evaluation failed. This allows dynamic configuration of the static setting in real time.

Advantageously the further request comprises information about at least a part of the content, in particular a preview of the content, requested from the further server. This way the pre-determined device can be used to take a look at the requested content to facilitate the approval decision.

Advantageously the further request is sent with information about the requester, in particular the username. This allows identifying the requester on the pre-determined device to facilitate the approval decision, for example in cases where one pre-determined device is used to control access of several different requesters.

Advantageously the pre-determined device is selected from a plurality of pre-determined devices depending on information about the requester, in particular an identification of a client device determined from the request. This way a method can be applied using several different pre-determined devices, for example for each requester a pre-determined device.

Advantageously a message comprising information about the result of the evaluation is sent in particular in a short message service message, in particular from the server to the client device.

Advantageously the result of the evaluation is stored, in particular in a blacklist or whitelist on the client device.

Advantageously a direct link between the client device and the further server is established via a further data link only after the access is allowed.

Advantageously a server, a computer program or a computer program product is adapted or operable to implement the method.

Further developments of the invention can be gathered from dependant claims and the following description.

### Brief description of the figures

In the following the invention will be explained further making reference to the attached drawings.
Figure 1 schematically shows a part of a computer network.
Figure 2 schematically shows a sequence diagram showing some typical sequences according to a first method for evaluating a request for access to content from a server in a computer network.
Figure 3 schematically shows a part of a computer network.
Figure 4 schematically shows a sequence diagram showing some typical sequences according to a second method for evaluating a request for access to content from a server in a computer network.

### Description of the embodiments

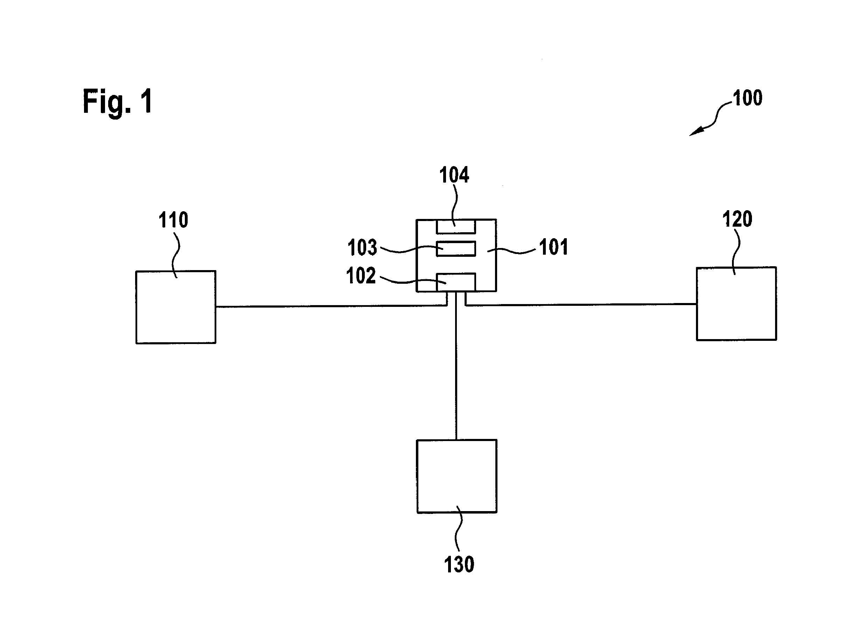

Figure 1 shows part of a computer network 100 comprising a server 101, a client device 110, a pre-determined device 120 and a further server 130. The servers and devices are connectable to each other via data links depicted as solid lines in figure 1. The data links are for example according to the internet protocol multimedia subsystem well known as IMS.

For example transmission control protocol / internet protocol links well known as TCP/IP links are used between the server 101 and the further server 130. For example a wireless data link according to the IEEE 811.2 or the long term evolution standard (well known as LTE) is used to connect the client device 110 or the pre-determined device 120 to the computer network 100. The data links may connect the servers and devices directly or via multiple network nodes.

The client device 110 and the pre-determined device 120 are, for example, mobile phones, smartphones, or personal computers.

The server 101 comprises a receiver 102 and a sender 102 for example a transceiver adapted or operable to send and receive data in particular messages. The server 101 furthermore comprises a processor 103 adapted or operable to execute a computer program and storage 104 to store a computer program for implementing the method described below.

The server 101 according to a first embodiment of the invention is a Short Message Service Gateway, specialized in sending and receiving Short Message Service Messages well known as SMS. According to the first embodiment the server 101 operates as a proxy server in the computer network 100. In this embodiment the client device 110 is a smartphone configured to access the computer network 100 only via the proxy server 101. The data link between the two is adapted or operable to allow sending of Short Message Service Messages and other data as well. Methods to configure smartphones to connect to the computer network 100 only via a pre-determined proxy server are well known to a person skilled in the art and not explained here in detail.

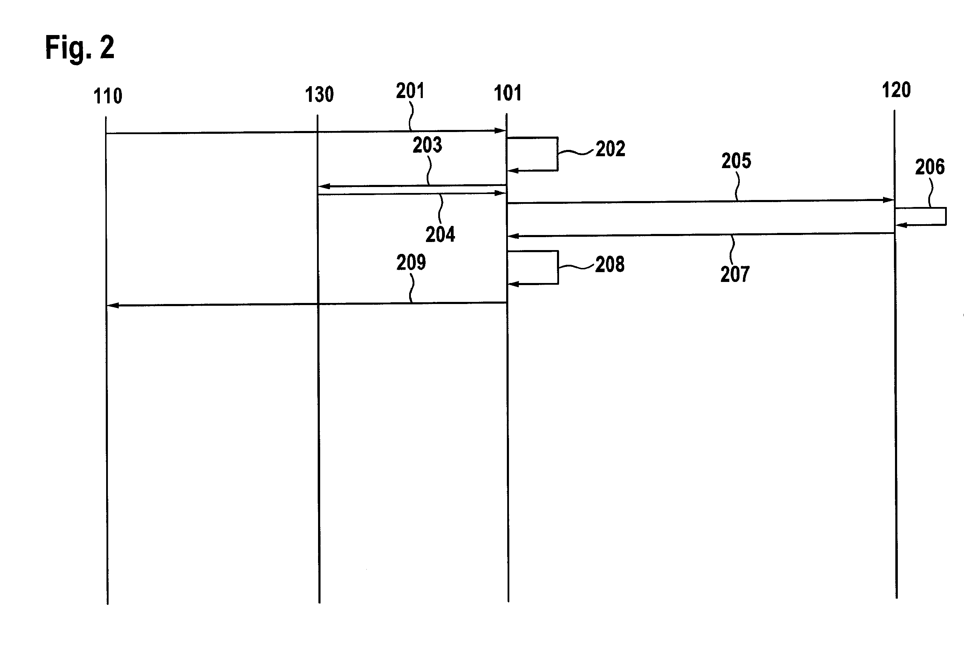

A first method for evaluating a request for access to content from the further server 130 is described below making reference to the sequence diagram of the figure 2. In this method the further server 130 is an internet web server providing access to content via the hypertext transfer protocol well known as HTTP. The method is described using the server 101 according to the first embodiment of the invention. The method applies likewise if the server 101 according to the second embodiment of the invention is implemented as add-on to the smartphone's internet web browser. The only difference there is then, that the messages sent between the server 101 and the client device 110 are internal messages in the second embodiment of the invention.

Unified resource locators, internet protocol addresses or any other type of addressing the content or the further server 130 may be used instead of the hyper text transfer protocol.

The method for example starts upon receipt of user input on the client device 110. The user input for example is a hypertext transfer protocol address typed by a user into an address field of the smartphone's internet web browser via a graphical user interface of the client device 110.

After the start a message 201, request, is sent from the client device 110 to the server 101. The message 201 is for example a request for access to content from further server 130. The message 201 for example comprises information about the further server 130. For example the request in message 201 comprises of an internet protocol address of the further server 130. Alternatively the message 201 may comprise any other type of information allowing identifying the content or the further server 130 in the computer network 100. Upon receipt of the message 201, request for access to the further server 130, in a step 202 a test is performed to determine whether the access to the further server 130 is allowed or denied.

In step 202 it is determined whether a link between the information about further server 130 and pre-determined information about servers of the computer network 100 can be established or not. The link consists for example of a match in filter rules like a blacklist or a whitelist that are used to identify internet protocol addresses that are allowed or denied. For example the information about the further server 130 is the internet protocol address of the further server 130 received in the message 201. In this case for example the access is allowed in case the internet protocol address is stored in the whitelist of servers of the computer network 100 that may be accessed. Likewise the access is denied in case the internet protocol address of the further server is not on the whitelist or is listed on the blacklist.

Afterwards a message 203, request content from the further server 130, is sent from the server 101 to the further server 130.

Upon receipt of the request for content in message 203 the further server 130 sends a message 204, response, including the requested content to the server 101. The request and response messages 203 and 204 are for example hypertext transport protocol requests and responses.

In case the decision to allow or deny access can be made in step 202 the method continues by providing the requested access. This means that in case access is allowed by the server 101 in step 202 the response in message 204 is forwarded to the client device 110. In case access is denied by the server 101 in step 202 the response in message 204 is not forwarded to the client device 110.

Alternatively to sending the messages 203, 204 after step 202 the messages request 203 and response 204 are not sent in case access is denied by the server 101 in step 202.

Optionally a response message not displayed in figure 2 is sent from the server 101 to the client device 110 in case the access is denied in step 202. The response message is for example an error message.

In case no link can be established between the information about the further server 130 and pre-determined information about servers in step 202 it may be unclear from the static configuration of the proxy server whether access shall be granted or denied. According to the method a further request 205 is sent to a pre-determined device 120. The further request 205 is a request for user input to confirm the message request 201. The further request 205 comprises information about the further server 130 or the requested content. In the example the further request 205 is sent to the pre-determined device 120 in case the internet protocol address of the further server 130 is neither in the blacklist nor in the whitelist.

According to the example the pre-determined device 120 is a mobile phone adapted or operable to receive the further request 205 and display a prompt for user input according to the further request 205. For example the further request 205 is a message comprising information about at least a part of the content requested, in particular a preview of the content requested from the further server 130. In this case the further request 205 is sent after the response message 204 comprising the content of further server 130 has been received at server 101.

Additionally or alternatively the further request 205 is sent with information about the requester, in particular, a username of the requester. To that end, for example, the client device 110 is identified by its internet protocol address and met to a particular username stored on the storage 104 in a list mapping users to client devices 110.

In case a plurality of pre-determined devices 120 are managed by the server 101 the pre-determined device 120 is selected from the plurality of pre-determined devices depending on the information about the requester, in particular an identification of the client device 110 determined from the request message 201. For example the internet protocol address of the client device 110 is determined from the message 201 and mapped to the pre-determined device 120 that is to be selected from the plurality of pre-determined devices. To that end, for example, the storage 104 comprises a list of pre-determined devices 120 and the mapping to respective internet protocol addresses of client devices 110.

Upon receipt of the further request 205, the pre-determined device 120 is adapted or operable to prompt for a user input in a step 206. The user prompt may comprise information about the requester or the content as received in the further request 205. In any case the pre-determined device 120 is adapted or operable to send a response 207 upon receipt of a user input. The user input is for example detected by a graphical user interface of the pre-determined device 120.

The response 207 to the further request 205 is either to allow or to deny access to the requested further server 130. This response 207 is determined depending on the user input, for example, to allow the access to the further server in case the pre-determined device 120 determines that the user input indicates that access shall be granted. Such user interfaces are well known to the person skilled in the art and not explained further here. For example, a touchscreen display on the pre-determined device 120 is used to display an allow or deny button next to the request for access showing the hypertext protocol address of the further server 120, the requester and/or the preview of the content requested.

The response is sent in a message 207 from pre-determined device 120 to the server 101.

Upon receipt of the response to the further request 205 in message 207 the request 201 is evaluated in a step 208. For example, access to the further server 130 is allowed in case the response to the further request 205 received in message 207 indicated to allow access. Likewise, the access to the further server 130 is denied in case the response 207 indicates that access is denied.

In case the access is allowed or denied, a message 209 is sent from the server 101 to the client device 110. The message 209 comprises information about the result of the evaluation, for example, an indication whether the access is allowed or denied. Alternatively or additionally the message 209 may comprise the content requested from the further server 130 by the client device 110. In this case the response message 209 may not comprise a dedicated indication that access is allowed. Furthermore, message 209 is optional and may be omitted in case of the denial of the access.

Alternatively in case no preview is sent in the further request 205, the request 203 and response 204 may not be sent after step 202 but at a later time after the approval has been received in response 207 to the further request 205. In this case the request 203 and response 204 may not be sent in case the access was denied in the response 207.

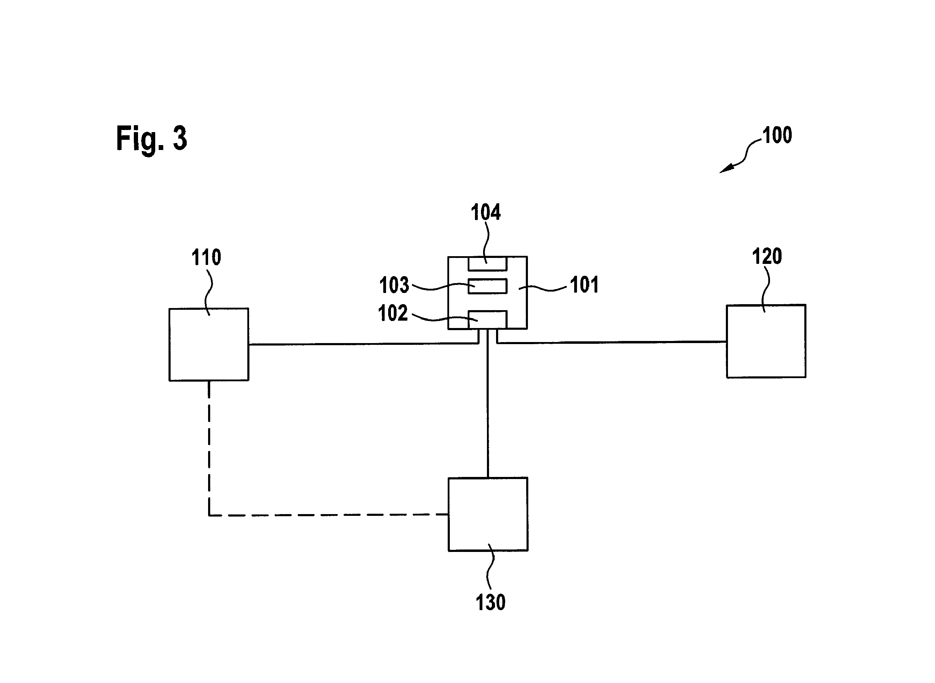

According to a second embodiment of the invention the server 101 is a Short Message Service Gateway, specialized in sending and receiving Short Message Service Messages well known as SMS. According to the second embodiment SMS based authorization is implemented in the client device 110 for example as a web browser add-on integrated in the smartphone's internet web browser. Figure 3 shows another part of the computer network 100 that comprises the server 101, the client device 110, the pre-determined device 120 and the further server 130 according to the second embodiment. In this case the client device 110, for example the smartphone, is configured to access the computer network 100 via a further data link. The further data link is depicted as dashed line between the client device 110 and the further server 130 in figure 3. The connection between the client device 110 and the further server 130 may be directly as depicted in figure 3 or via one or more network nodes in between the two. Furthermore the data link between the client device 110 and the server 101 is adapted or operable to transfer Short Message Service Messages between the two. According to this second embodiment, the client device 110 is adapted or operable to perform a SMS based authorization i.e. to send request for access to the further server 130 as a Short Message Service Message and to receive a response either granting or denying access in a Short Message Service Message. Furthermore the SMS based authorization comprises of allowing or denying access depending on the content of the received Short Message Service Message. For example the client device 110 is adapted or operable to allow access to the computer network 100 only via the browser add-on implementing the functions of SMS based authorization. In this case also the receiver 102 and the sender 102 as well as the processor 103 and the storage 104 are part of the server 101. Alternatively they may be part of the client device 110, for example the smartphone.

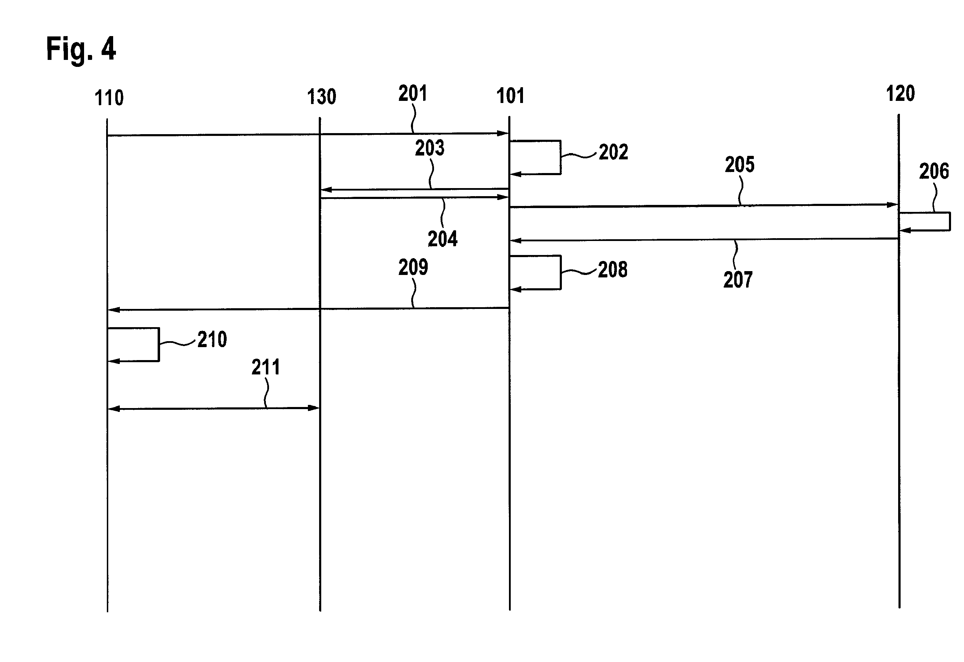

A second method for evaluating a request for access to content from the further server 130 is described below making reference to the sequence diagram of the figure 4. In this method the further server 130 is an internet web server providing access to content via the hypertext transfer protocol well known as HTTP. The method is described using the server 101, the client device 110 and the pre-determined device 120 according to the second embodiment of the invention. The steps 201 to 208 according to the first method apply likewise in the second method and are labeled identically in figure 4.

Furthermore the in case the access is allowed or denied, according to the second method the message 209 is sent from the server 101 to the client device 110. The message 209 comprises information about the result of the evaluation, for example, an indication whether the access is allowed or denied.

Upon receipt of the message 209 the client device 101 determines in a step 210 whether access is allowed or denied. Furthermore the client device 101 is adapted or operable to establish a connection 211 to the further server 130 via the further data link directly when access is allowed or to deny access otherwise by not establishing the connection 211. In the latter case an error message may be displayed. The direct connection 211 hence is a direct link, i.e. not via the server 101, to the further server 130 only after successful authorization.

Message 209 is optional and may be omitted in case of the denial of the access. In this case the client device 110 is configured to not allow access in case no response is received.

For example the browser add-on is adapted or operable to perform the steps described above.

The methods described allows prompting the user of the pre-determined device 120 for approval or denial of access to the further server 130 and the content of the further server 130 before the client device 110 is able to access the content or information on the further server 130. Because the automatic filter rules like blacklist and whitelist are not the only indication whether access shall be allowed or denied the method described above improves the evaluation of the requests for access and allows real-time configuration of the access control.

In an amendment to either of the two embodiments described above the result of the evaluation regarding access or denial may be stored, for example, as new filter rules or new blacklist or whitelist entries. This way the filter rules like blacklist and whitelist are automatically updated based on the decision of the approval received from the pre-determined device 120.

According to the second embodiment the blacklist/whitelist entries may be stored on the client device 110 in step 210 as well.

In the specific embodiment of the invention described above in the first embodiment request 205 and response 207 and in the second embodiment messages 201, 205, 207 and 209 are messages according to the Short Message Service well known as SMS. In this cases the server 101 comprises a Short Message Service gateway adapted or operable to send the requests and receive the responses of the messages respectively as Short Message Service messages. In case of the first embodiment the server 101 is adapted or operable to create Short Message Service messages from the request message 201 and optionally the content received in the response message 204 in order to provide the pre-determined device 120 with the further request 205. Likewise the server 101 is adapted or operable to receive the response 207 as Short Message Service message from the pre-determined device 120 and determine whether the access is allowed or denied by processing the content of the Short Message Service message in step 208. In case of the second embodiment, the messages 201, 205, 207 and 209 are processed as SMS.

In this case the pre-determined device 120 is adapted or operable to send the response in a Short Message Service message and to determine the content of this message. The pre-determined device 120 is for example adapted or operable to display the content of the request received in the Short Message Service message optionally with the preview of the requested content. For example the string "allowed" or the string "denied" is displayed next to a user prompt and the response is sent in a Short Message Service message, for example, containing the string "allowed" or the string "denied" depending on whether the user input detected by pre-determined device 120 is "allowed" or "denied".

Instead of using Short Message Service messages, any other protocol or method for sending the respective data may be used.

Furthermore the server 101 or the client device 110 may comprise of an interface allowing access to the storage 104 and to configure the filter rules of the server 101, e.g. blacklists or whitelists.

Furthermore, the address of the pre-determined device 120 or the mapping of the pre-determined device 120 to the client device 110 may be configured via this interface.

Optionally a plurality of pre-determined devices 120 and individual mappings to client devices 110 may be configured this way as well.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that the sequence diagram represents various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for evaluating, in particular on a server (101), a request (201) for access to content from a further server (130) in a computer network (100), wherein upon receipt of the request (201) for access to the further server (130) comprising information about the further server (130), in particular in a short message service message, a test is performed to determine whether the access is allowed or denied, the test comprising the steps of
- sending a further request (205) for user input to confirm the request (201) for access comprising information about the further server (130), in particular in a short message service message, to a predetermined device (120) in case no link can be established (202) between the information about the further server (130) and predetermined information about servers,
- evaluating (208) the request (201) upon receipt of a response (207), in particular in a short message service message, to said further request (205).

2. The method according to claim 1, wherein the further request (205) comprises information about at least a part of the content, in particular a preview of the content, requested from the further server (130).

3. The method according to claim 1 or 2, wherein the further request (205) is sent with information about the requester, in particular a user name.

4. The method according to claim 1 to 3, wherein the predetermined device (120) is selected from a plurality of predetermined devices (120) depending on information about the requester, in particular an identification of a client device (110) determined from the request (201).

5. The method according to claim 1 to 4, wherein a message (209) comprising information about the result of the evaluation is sent in particular in a short message service message, in particular from the server (101) to the client device (110).

6. The method according to claim 1 to 5, wherein the result of the evaluation is stored, in particular stored (210) in a blacklist or whitelist on the client device (110).

7. The method according to claim 1 to 6, wherein a direct link (211) between the client device (110) and the further server (130) is established via a further data link only after the access is allowed.

8. A server (101) for evaluating a request for access to content from a further server (130) operable to upon receipt of the request (201) for access to the further server (130) comprising information about the further server (130), in particular in a short message service message, perform a test to determine whether the access is allowed or denied, the test comprising the steps of
- sending a further request (205), for user input to confirm the request (201) for access comprising information about the further server (130), in particular in a short message service message, to a predetermined device (120) in case no link can be established (202) by the server (101) between the information about the further server (130) and predetermined information about servers,
- evaluating (208) the request (201) upon receipt of a response (207), in particular in a short message service message, to the further request (205).

9. The server (101) according to claim 8, comprising a receiver (102) operable to receive the request (201), in particular in a short message service message, and the response (207), in particular in a short message service message, to the further request (205), a sender (102), operable to send the further request (205), in particular in a short message service message, to the predetermined device (120), and a processor (103) operable to upon receipt of the request (201) determine the information about the further server (130) from the received request (201), operable to perform the test, and operable to determine (202) if the link between the information about the further server (130) and predetermined information about servers, in particular stored an storage (104), can be established or not , and to evaluate (208) the request (201) upon receipt of the response (207) to the further request (205).

10. The server (101) according to claim 8 to 9, comprising storage (104) storing information about a plurality of predetermined devices, wherein the processor (103) is operable to select the predetermined device (120) from the plurality of predetermined devices.

11. The server (101) according to claim 8 to 10, wherein the further request (205) comprises information about at least a part of the content, in particular a preview of the content, requested from the further server (130).

12. The server (101) according to claim 8 to 11, wherein the further request (205) is sent with information about the requester.

13. The server (101) according to claim 8 to 12, operable to send a message (209) comprising information about the result of the evaluation, in particular in a short message service message, in particular to the client device (110).

14. A computer program for evaluating on a server (101) a request for access to a further server (130), wherein said computer program, when executed on a computer, causes the computer to execute the method according to claim 1.

15. A computer program product for evaluating on a server (101) a request for access to a further server (130) comprising a computer usable medium having a computer readable program, wherein said computer readable program, when executed on a computer, causes the computer to execute the method according to claim 1
